# EUROPEAN PATENT SPECIFICATION

(11) **EP 1 832 791 B1**
(45) Date of publication and mention of the grant of the patent: **27.04.2011**
(21) Application number: 07004279.1
(22) Date of filing: 01.03.2007
(51) Int. Cl.: F16L 3/10

(54) **A fixture**
Befestigungsvorrichtung
Dispositif de fixation

(30) Priority: 06.03.2006 JP 2006059975
(43) Date of publication of application: 12.09.2007
(73) Proprietor: Sumitomo Wiring Systems, Ltd., Yokkaichi-city, Mie 510-8503 (JP)
(72) Inventor: Ibaraki, Masato, Yokkaichi-city Mie 510-8503 (JP)
(74) Representative: Müller-Boré & Partner Patentanwälte

(56) References cited:
- EP-A2- 0 885 780
- JP-A- 11 013 942
- US-A- 5 390 876

## Description

The present invention relates to a fixture used to attach an article to be attached such as a wiring harness to an attachment base such as a vehicle.

A fixture used to attach an article to be attached such as a wiring harness to an attachment base such as a vehicle is disclosed in Japanese Unexamined Utility Model Publication No. H06-043309. This fixture is comprised of two half pieces to be united in such a manner as to surround the article to be attached, wherein one half piece is formed with a mount hole through which a plate-shaped bracket of the attachment base is inserted, and is attached to the bracket by sandwiching the bracket between opposed pressing surfaces of the inner surface of the mount hole.

With the fixture of this type, resistance created upon inserting the bracket into the mount hole is large to reduce operability if the thickness of the bracket is lager than a clearance between the pressing surfaces and, conversely, insertion resistance is smaller, but the bracket and the fixture shake relative to each other in an attached state if the thickness of the bracket is smaller than the clearance between the pressing surfaces.

Document EP 0 885 780 A2 discloses a bracket locking clamp. The clamp includes a base plate to be fixed to an automotive wiring harness by taping and a box portion integrally formed with the base plate, and an arm having a lock claw at its leading end projects from a rear part of the lower inner surface of the box portion into a hollow portion of the box portion. A bracket projecting from a vehicle body is inserted into the hollow portion of the box portion and the lock claw is inserted into as hole formed in the bracket to lock the bracket and the clamp. Thinned and elastically deformed thickness take-up portions are formed at the opposite side walls of the box portion. In the case that the bracket being inserted into the hollow portion of the box portion is thick, the thickness take-up portions extend to enable the insertion of the lock claw into the hole of the bracket.

Document US 5,390,876 discloses holder for fixing wiring harness and the like to automobile body according to the preamble of claim 1 and including a fastening member, a base member, and a hinged connecting member for interconnecting the fastening member and the base member in a manner that the fastening member can be pivoted for the base member. The fastening member has a mounting block including a through hole. The base member has a mating portion including an insertion opening. The mounting block has engagement means engageable with engagement means provided on a bracket mounted on an automobile body. The engagement means of the bracket is engaged with the engagement means of the mounting block when the bracket is received in the through hole passed through the insertion opening, whereby the fastening member is mounted on the bracket in its closed position.

Document JP 11-013942 discloses a vibration-proof clamp having a pair of base frames which may be opened and closed.

Thus, according to an aspect, it is a problem to provide a fixture with improved attaching operability to a bracket and to prevent the fixture and the bracket from shaking relative to each other.

This problem is solved by a fixture having the features disclosed in claim 1. Preferred embodiments are defined in the dependent subclaims.

In the process of inserting the bracket between the paired pressing portions, insertion resistance does not become excessive since the resilient deforming portion is resiliently deformed to widen the clearance between both pressing portions. Further, since the paired pressing portions sandwich the bracket by the resilient force of the resilient deforming portion with the attaching portion attached to the bracket, the attaching portion and the bracket do not shake relative to each other.

According to a preferred embodiment of the invention, a pair of resilient deforming portions are arranged while being spaced apart in the width direction of the bracket.

If the resilient deforming portion is provided only at one position along the width direction of the bracket, the bracket might be inclined in width direction with a contact position of the bracket and the resilient deforming portion as a supporting point. However, the inclination of the bracket in width direction can be prevented since the pair of resilient deforming portions are provided while being spaced apart in the width direction of the bracket according to the present invention.

Preferably, the resilient deforming portion and the retaining piece are arranged at the same side with respect to the bracket.

If the resilient deforming portion and the retaining piece are provided, deformation spaces for permitting the resilient deformations in direction(s) away from the bracket have to be provided. Since both the resilient deforming portion and the retaining piece are arranged at the same side with respect to the bracket according to the present invention, both deformation spaces are arranged at the same side with respect to the bracket. Accordingly, the attaching portion can be made smaller as compared to the case where the deformation space for the resilient deforming portion and the one for the retaining piece are arranged at the opposite sides of the bracket.

Most preferably, the attaching portion is a retaining piece that is resiliently deformable in directions intersecting with an attaching direction to the bracket and can prevent the attaching portion from being separated from the bracket by being engaged with the bracket.

Since the retaining piece for preventing the separation of the attaching portion from the bracket doubles as the resilient deforming portion, the construction of the attaching portion can be simpler as compared to the case where the resilient deforming portion is provided in addition to the retaining piece.

According to a further preferred embodiment of the invention, the retaining piece is in the form of a cantilever extending substantially along the attaching direction to the bracket.

Preferably, the retaining piece is formed with a retaining projection that has a locking surface engageable with a retaining hole of the bracket and can prevent the attaching portion from being separated from the bracket by being engaged with the retaining hole.

Further preferably, the retaining projection is formed with a protrusion by raising a part of the locking surface, wherein the protrusion is most preferably formed at the base end of the retaining projection.

Since the retaining piece preferably is substantially in the form of a cantilever, the retaining piece is resiliently deformed to be inclined by the interference of the projecting end of the retaining projection with the bracket in the process of attaching the bracket and the attaching portion to each other. When the bracket and the attaching portion are properly attached to each other, the retaining piece is resiliently restored, whereby the retaining projection enters the retaining hole and the locking surface faces the edge of the retaining hole so that it can come into contact therewith.

Since the retaining projection preferably is displaced in a direction to be slightly distanced from the edge of the retaining hole upon entering the retaining hole as the retaining piece is resiliently restored, a small clearance comes to be formed between the locking surface and the edge of the retaining hole, which might result in the shaking of the bracket and the attaching portion relative to each other in the attaching direction.

However, since the protrusion is formed to project by raising the part of the locking surface according to the present invention, this protrusion fills up the clearance between the edge of the retaining hole and the locking surface. Therefore, there is no likelihood that the bracket and the attaching portion shake relative to each other in the attaching direction.

According to a further preferred embodiment of the invention, the protrusion at least partly fills up the clearance between the retaining hole and the locking surface in a state where the bracket is in contact with a front stop portion and the retaining piece is resiliently at least partly restored.

Preferably, a front stop portion is provided such that the bracket cannot be inserted any further by the contact of the distal end edge thereof with the front stop portion when the bracket is inserted to a substantially proper insertion position.

Most preferably, a mount hole being substantially H-shaped in plan view is so formed inside the attaching portion as to penetrate substantially along an inserting direction of the bracket.

These and other objects, features and advantages of the present invention will become more apparent upon reading of the following detailed description of preferred embodiments and accompanying drawings. It should be understood that even though embodiments are separately described, single features thereof may be combined to additional embodiments.
FIG. 1 is a horizontal section of a preferred embodiment,
FIG. 2 is a vertical section showing a state before two half pieces are united,
FIG. 3 is a plan view showing the state before the two half pieces are united,
FIG. 4 is a bottom view showing the state before the two half pieces are united,
FIG. 5 is a side view showing the state before the two half pieces are united,
FIG. 6 is a partial enlarged vertical section of an attaching portion,
FIG. 7 is a section along X-X of FIG. 6,
FIG. 8 is a partial enlarged vertical section showing a state where the attaching portion is attached to a bracket,
FIG. 9 is a partial enlarged horizontal section showing a state where the attaching portion is attached to the bracket,
FIG. 10 is a horizontal section of an illustrative example,
FIG. 11 is a vertical section showing a state before two half pieces are united,
FIG. 12 is a plan view showing the state before the two half pieces are united,
FIG. 13 is a bottom view showing the state before the two half pieces are united,
FIG. 14 is a side view showing the state before the two half pieces are united,
FIG. 15 is a partial enlarged vertical section of an attaching portion,
FIG. 16 is a section along A-A of FIG. 15,
FIG. 17 is a partial enlarged vertical section showing a state where the attaching portion is attached to a bracket, and
FIG. 18 is a partial enlarged horizontal section showing a state where the attaching portion is attached to the bracket.

### <Preferred Embodiment>

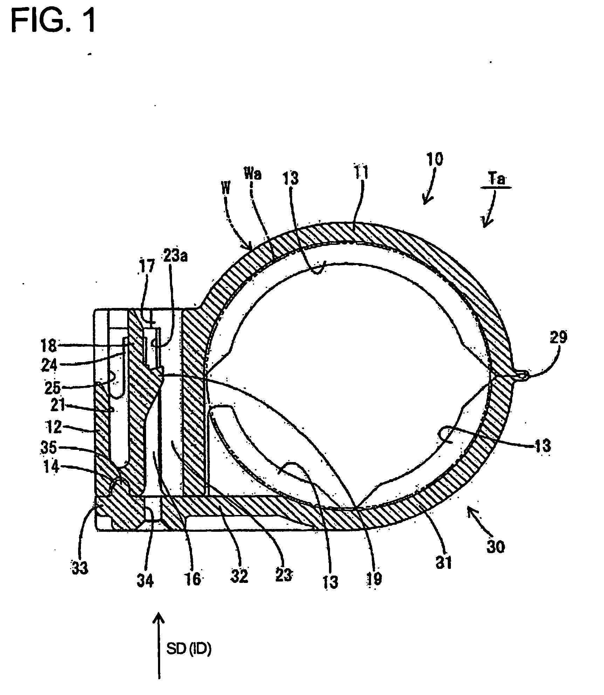

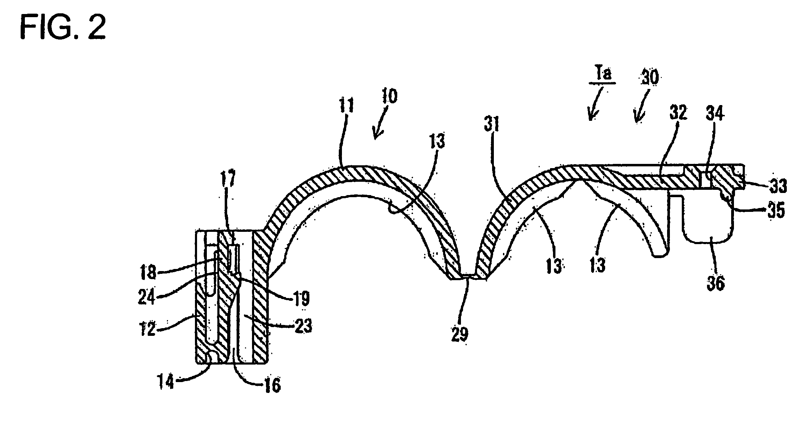

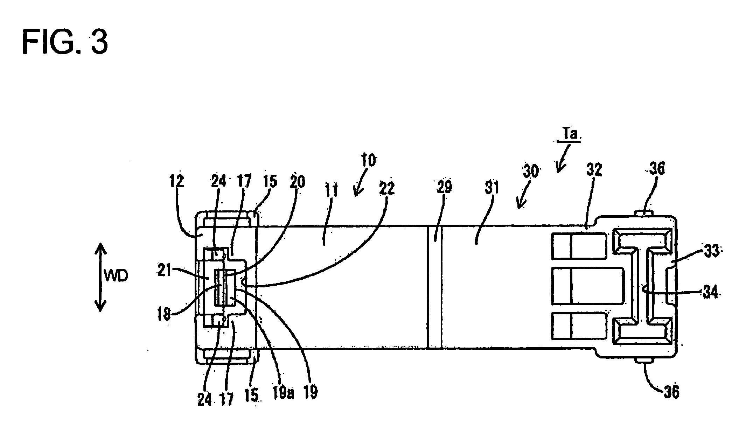

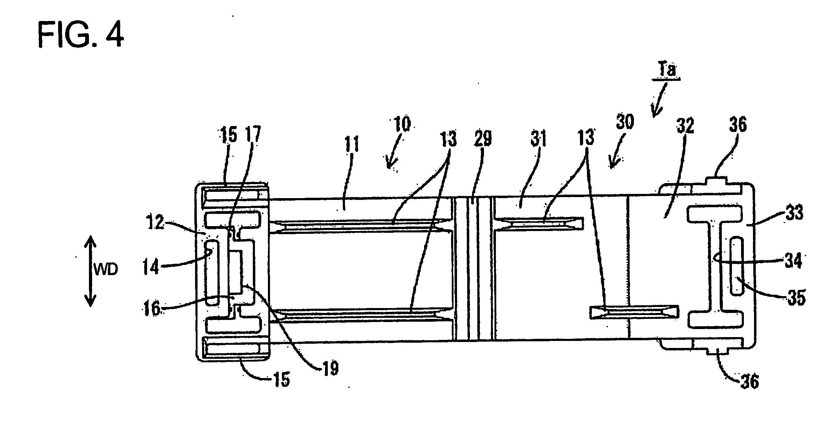

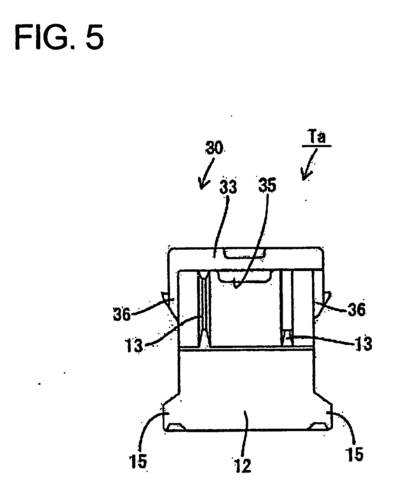

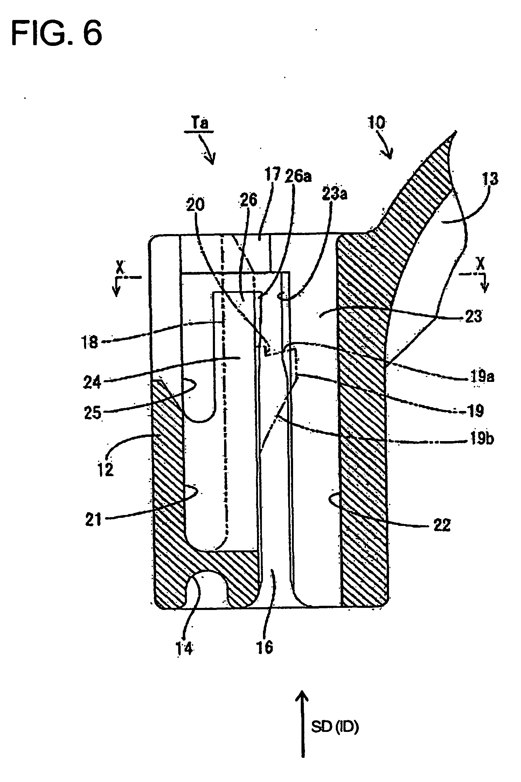

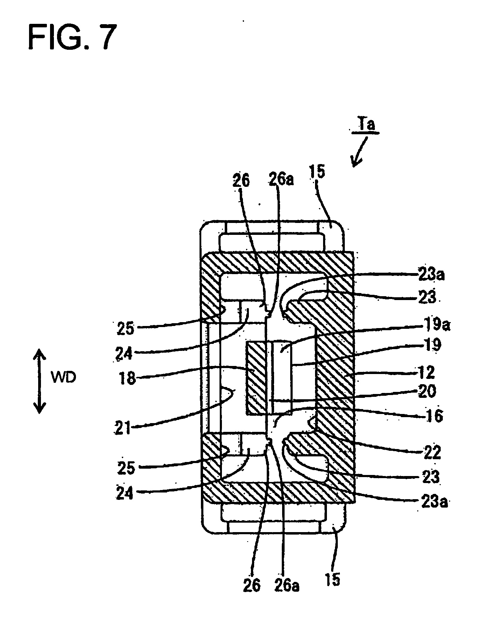

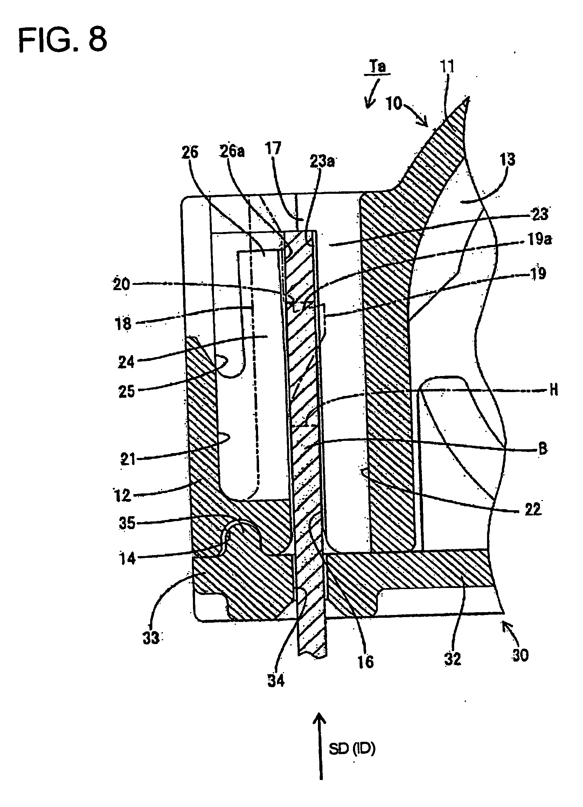

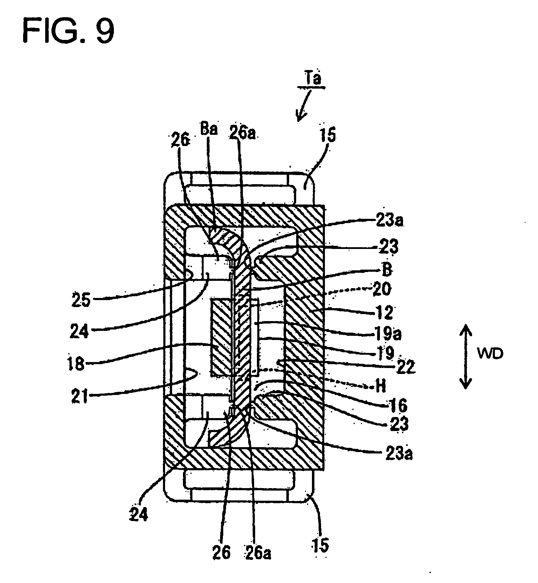

Hereafter, a preferred embodiment of the present invention is described with reference to FIGS. 1 to 9. A fixture Ta of the first embodiment preferably is used for attaching a wiring harness W (as a preferred article to be attached) to an attachment base (not shown) such as a vehicle, body structure, device, frame element or the like. The wiring harness W is such that one or more, preferably a plurality of wires (not shown) are surrounded together by a (preferably substantially round bellows-shaped) corrugate tube Wa, and a plurality of engaging grooves (not shown) extending substantially in circumferential direction are formed one after another along longitudinal direction in the outer circumferential surface of the corrugate tube Wa. A substantially plate-shaped bracket B projects in a standing direction SD (e.g. substantially upward) from the attachment base. One or more (preferably substantially quarter circular) curved portions Ba are formed at the substantially opposite lateral edges substantially along the standing direction SD of the bracket B (see FIG. 9). Further, the bracket B is formed with a (preferably substantially rectangular) retaining hole H penetrating in thickness direction.

The fixture Ta is made e.g. of synthetic resin and formed such that a first and a second half pieces 10, 30 (as preferred fixture parts), which are united into a substantially tubular shape to at least partly surround the corrugate tube Wa, are made integral or unitary via at least one hinge 29. In the following description, reference is made to a state where the first and second half pieces 10, 30 are united and attached to the bracket B (state shown in FIG. 1) concerning vertical direction.

The first half piece 10 (as a preferred first fixture part) includes a substantially semicircular portion 11 (as a preferred tube holding portion) and an attaching portion 12 integrally or unitarily formed at an edge portion of the substantially semicircular portion 11 substantially opposite to the hinge 29. One or more, preferably a pair of substantially semicircular engaging ribs 13 (as preferred one or more engaging ribs) engageable with the respective engaging grooves of the corrugate tube Wa are formed on a curved surface (or surface substantially corresponding to an outer shape of the corrugate tube Wa) at a bottom or inner side of the substantially semicircular portion 11, which surface constitutes part of the inner circumferential surface in a united state, while being spaced in width direction WD (i.e. longitudinal direction of the corrugate tube Wa). The attaching portion 12 preferably is substantially in the form of a block being long as a whole along a vertical direction or along the standing direction SD, a positioning groove 14 is formed in the bottom or base surface of the attaching portion 12, and one or more lock pieces 15 are formed at the upper end(s) of the lateral (left and/or right) outer surface(s) of the attaching portion 12.. A mount hole 16 (preferably substantially H-shaped in plan view) is so formed inside the attaching portion 12 as to substantially vertically penetrate (or penetrate substantially along the standing direction SD or in an inserting direction ID). The bracket B is at least partly insertable into the mount hole 16 in the inserting direction ID, preferably substantially from below. Further, a front stop portion 17 preferably is formed at the upper end of the mount hole 16 preferably by narrowing an opening at the upper side.

A (preferably substantially cantilever-shaped) retaining piece 18 projecting upward (preferably substantially same direction as an inserting direction ID of the bracket B into the mount hole 16) is formed substantially along or at the inner wall surface of the mount hole 16 in the attaching portion 12. This retaining piece 18 is located at an intermediate position (preferably substantially at a widthwise middle position) of the mount hole 16, and the upper end (extending end) thereof is located at least partly in the opening of the mount hole 16 in the upper surface of the attaching portion 12 preferably so that it can be seen from the outside. Further, a (preferably substantially triangular) retaining projection 19 is formed on a surface of the retaining piece 18 substantially facing the mount hole 16. The upper surface of the retaining projection 19 is formed into a locking surface 19a strongly inclined or substantially normal to the inserting direction ID of the bracket B into the mount hole 16, and the lower surface thereof is formed into a guiding slant 19b (smoothly) inclined with respect to the inserting direction ID of the bracket B. Further, a protrusion 20 is formed to project upward by raising a part (base end) of the locking surface 19a of the retaining projection 19.

Inside the attaching portion 12, a deformation space 21 is formed at a side of the retaining piece 18 substantially opposite to the mount hole 16, so that the retaining piece 18 is resiliently deformable to move toward or at least partly inside the deformation space 21 while being inclined and retracting the retaining projection 19 from the mount hole 16. In a free state where the retaining piece 18 is substantially not resiliently deformed, the surface of the retaining piece 18 where the retaining projection 19 is formed preferably is located substantially in flush with the inner wall surface of the mount hole 16, and the retaining projection 19 projects into the mount hole 16 (insertion area for the bracket B). Further, a recess 22 for avoiding interference with the retaining projection 19 preferably is formed in an inner wall surface of the mount hole 16 substantially opposite to the retaining piece 18, and the inner wall surface where this recess 22 is formed is divided into two or more areas at the substantially opposite sides of the recess 22, these two areas serving as a pair of fixed pressing portions 23 spaced apart in width direction WD. One or more sliding contact ribs 23a substantially facing the mount hole 16 are formed to project from these fixed pressing portions 23. Each sliding contact rib 23a extends substantially straight in vertical direction (or preferably in a direction substantially parallel to the inserting direction ID of the bracket B) over at least part, preferably substantially over the entire length of the mount hole 16, and the projecting distance thereof is longer in an area corresponding to an upper end portion of the mount hole 16. It should be noted that the aforementioned front stop portion 17 preferably is so arranged as to conform to the fixed pressing portions 23 with respect to width direction WD.

One or more, preferably a pair of holding pieces 24 (as a preferred resilient deforming portion) are formed at the (preferably substantially opposite) side(s) of the retaining piece 18 while preferably being spaced apart in width direction WD. Similar to the retaining piece 18, the holding piece(s) 24 preferably is/are in the form of cantilevers substantially extending upward along the inner wall surface of the mount hole 16, and is/are resiliently deformable to move toward deformation spaces 25 communicating with the deformation space 21 for the retaining piece 18. The extending ends (upper or distal ends) of the holding pieces 24 are located below the extending end (upper or distal end) of the retaining piece 18, and the base ends (as preferred supporting points of resilient deformation) of the holding pieces 24 are located above the base end of the retaining piece 18. Therefore, the holding pieces 24 are longer than the retaining piece 18 in vertical direction or along the standing direction SD or the inserting direction SD.

This pair of holding pieces 24 are arranged substantially in conformity with the fixed pressing portions 23 with respect to width direction WD, and surfaces of the holding piece(s) 24 substantially facing the fixed pressing portion(s) 23 serve as movable pressing portion(s) 26. Similar to the fixed pressing portions 23, one or more sliding contact ribs 26a substantially facing the mount hole 16 are formed to project from the movable pressing portions 26. Each sliding contact rib 26a extends substantially straight in vertical direction (direction parallel to the inserting direction ID of the bracket B) over at least part, preferably substantially over the entire length of the mount hole 16, and the projecting distance thereof is longer in an area corresponding to the upper end portion of the mount hole 16 (extending ends of the holding pieces 24). A clearance between the sliding contact ribs 23a of the fixed pressing portions 23 and those 26a of the movable pressing portions 26 (holding pieces 24) in a free state where the holding pieces 24 are not resiliently deformed is slightly larger than the thickness of the bracket B at least along part thereof preferably except in an upper end area, and preferably smaller than the thickness of the bracket B in the upper end area. If both the retaining piece 18 and the holding pieces 24 are in their free states, the sliding contact ribs 26a of the holding pieces 24 project more into the mount hole 16 than the surface of the retaining piece 18 where the retaining projection 19 is formed.

The second half piece 30 (as a preferred second fixture part) includes a substantially semicircular portion 31 (as a preferred tube holding portion), a substantially flat portion 32 integrally or unitarily and/or substantially tangentially extending from an edge portion of the substantially semicircular portion 31 substantially opposite to the hinge 29, and/or a lid 33 integrally or unitarily formed at an edge portion of the substantially flat portion 32 substantially opposite to the substantially semicircular portion 31. One or more, preferably a pair of substantially semicircular engaging ribs 13 (as preferred one or more engaging ribs) engageable with the respective engaging grooves of the corrugate tube Wa are formed in an offset manner on one or more curved surfaces (or surface(s) substantially corresponding to an outer shape of the corrugate tube WA) at upper or inner sides of the substantially semicircular portion 31 and the substantially flat portion 32 which surface(s) constitute part of the inner circumferential surface in the united state, while preferably being spaced in width direction WD (i.e. longitudinal direction of the corrugate tube Wa). The lid 33 preferably is substantially flush with and continuous with the substantially flat portion 32, and at least one substantially H-shaped receiving hole 34 similar to the mount hole 16 of the first half piece 10 is formed to vertically penetrate the lid 33. Further, a positioning projection 35 is formed on the upper surface of the lid 33, and one or more, preferably a pair of lock projections 36 are formed at the (preferably substantially opposite) lateral (left and/or right) edge(s) of the lid 33.

With the first and second half pieces 10, 30 united, the positioning projection 35 is engaged with the positioning groove 14, whereby the lid 33 is positioned relative to the attaching portion 12 with respect to forward and backward direction and/or transverse direction (horizontal directions), the receiving hole 34 is substantially aligned with (located in conformity with) the mount hole 16, and/or the lid 33 is placed substantially in surface contact with the bottom surface of the attaching portion 12. By the engagement of the one or more lock projections 36 with the one or more lock pieces 15, the lid 33 and the attaching portion 12 are held assembled, i.e. the first and second half pieces 10, 30 are locked in the united state. In this united state, the corrugate tube Wa is held or positioned between both half pieces 10, 30 from radially substantially opposite sides (e.g. from upper and lower sides), and the one or more engaging ribs 13 are engaged with the respective one or more engaging grooves, whereby the fixture Ta is attached to the corrugate tube W1 (wiring harness W) while having relative movements in the longitudinal direction of the corrugate tube W1 prevented.

As described above, the fixture Ta attached to the wiring harness W is assembled by fitting the mount hole 16 onto the bracket B projecting substantially in standing direction SD or substantially upwardly. Upon assembling, the bracket B at least partly enters the mount hole 16 of the attaching portion 12 after passing the receiving hole 34 of the lid 33. As the assembling progresses, the upper end of the bracket B comes substantially into contact with the guiding slant 19B of the retaining projection 19 and, thereafter, the retaining piece 18 is resiliently deformed substantially toward the deformation space 21 as the bracket B is at least partly inserted. When the bracket B is inserted to a substantially proper insertion position (preferably where the bracket B cannot be inserted any further by the contact of the upper end edge thereof with the front stop portion 17), the retaining piece 18 is resiliently at least partly restored and the retaining projection 19 at least partly enters the retaining hole H of the bracket B, whereby the upward facing locking surface 19a of the retaining projection 19 faces the edge (upper edge) of the retaining hole H so that it can come substantially into contact therewith. Accordingly, even if the fixture Ta tries to move upward relative to the bracket B, such an upward movement (i.e. separation from the bracket B) of the fixture Ta is prevented by the contact of the retaining projection 19 with the edge of the retaining hole H.

Here, since the retaining piece 18 preferably is in the form of a cantilever, the posture thereof becomes oblique with respect to the one in the free state and the leading end of the retaining projection 19 comes to be displaced slightly upward with respect to the one in the free state when the retaining piece 18 is resiliently deformed toward the deformation space 21 by the interference with the bracket B. When the retaining projection 19 at least partly enters the retaining hole H as the retaining piece 18 is resiliently at least partly, preferably substantially fully restored, the leading end of the retaining projection 19 is displaced downward (direction away from the upper edge of the retaining hole H). As a result, the edge (upper edge) of the retaining hole H comes to be spaced apart from the leading end of the retaining projection 19 and the locking surface 19a.

However, since the protrusion 20 is formed to substantially project in the inserting direction ID and/or in the standing direction SD or upward by raising the part (base end) of the locking surface 19a in this embodiment, this protrusion 20 at least partly fills up the clearance between the edge of the retaining hole H and the locking surface 19a in a state where the bracket B is in contact with the front stop portion 17 and the retaining piece 18 is resiliently at least partly restored. Therefore, there is no likelihood that the bracket B and the attaching portion 12 shake relative to each other in an attaching direction.

Further, since the protrusion 20 is formed at the base end of the retaining projection 19 in view of the fact that the leading end of the retaining projection 19 first at least partly enters the retaining hole H, the protrusion 20 is engaged with the upper or front edge of the retaining hole H only shortly before or at a final stage of the entrance of the retaining projection 19 into the retaining hole H. Accordingly, the presence of the protrusion 20 does not hinder the resiliently restoring movement of the retaining piece 18 (entrance of the retaining projection 19 into the retaining hole H).

In the process of attaching the bracket B to the fixture Ta, the bracket B having at least partly entered the mount hole 16 preferably is sandwiched or clamped between the one or more paired pressing portions (fixed pressing portions 23 and the movable pressing portions 26). In this embodiment, the movable pressing portions 26, out of the paired pressing portions 23, 26, are provided on the holding pieces 24 resiliently deformable in directions to widen and narrow the clearance to the fixed pressing portions 23, and the clearance between the paired pressing portions 23, 26 preferably is set smaller than the thickness of the bracket B in the free state where the holding pieces 24 are not resiliently deformed. Accordingly, in the process of at least partly inserting the bracket B between the fixed pressing portion(s) 23 and the movable pressing portion(s) 26, the holding piece(s) 24 is/are resiliently deformed to widen the clearance between these pressing portions 23, 26, wherefore insertion resistance does not become excessive. Further, with the attaching portion 12 attached to the bracket B, the pressing portions 23, 26 preferably keep sandwiching the bracket B therebetween by resilient forces of the holding pieces 24. Thus, the attaching portion 12 and the bracket B do not shake relative to each other.

If the holding piece is provided only at one position along the width direction WD of the bracket B, the bracket B might be inclined in width direction with a contact position of the bracket B and the holding piece 24 as a supporting point. However, the inclination of the bracket B in width direction WD can be prevented since the pair of holding pieces 24 are provided while being spaced apart in the width direction WD of the bracket B (direction at an angle different from 0° or 180°, preferably substantially normal to the entering or insertion direction ID of the bracket B into the mount hole 16) in this embodiment.

In this embodiment is also preferably provided the retaining piece 18 that is resiliently deformable in directions intersecting with an attaching direction to the bracket B and can prevent the separation of the attaching portion 12 from the bracket B by being engaged with the bracket B. Here, if the retaining piece 18 preferably is provided in addition to the holding pieces 24, the deformations paces 21, 25 for permitting the resilient deformations of the retaining piece 18 and the holding pieces 24 in direction(s) away from the bracket B have to be defined. Since both the retaining piece 18 and the holding pieces 24 preferably are arranged at the same side with respect to the bracket B in this embodiment, the deformation spaces 21, 25 therefor preferably are arranged at the same side with respect to the bracket B. Accordingly, the attaching portion 12 can be made smaller in this embodiment as compared to the case where the deformation spaces for the holding pieces 24 and the one for the retaining piece 18 are arranged at the opposite sides of the bracket B. Accordingly, to improve the attaching operability of an attaching portion to a bracket and to prevent the bracket and the attaching portion from shaking relative to each other, an attaching portion 12 includes one or more holding pieces 24 (resilient deforming portion) resiliently deformable and (preferably each) having at least one pressing portion 26, and a clearance between adjacent or facing pressing portions 23, 26 is set smaller than the thickness of a bracket B in a free state where the holding pieces 24 are not resiliently deformed. In the process of at least partly inserting the bracket B between the pressing portions 23, 26, the holding pieces 24 are so resiliently deformed as to widen the clearance between the pressing portions 23, 26, wherefore insertion resistance does not become excessive. Since the bracket B is sandwiched or clamped or arranged between the pressing portions 23, 26 by resilient forces of the holding piece(s) 24 with the attaching portion 12 attached to the bracket B, the attaching portion 12 and the bracket B do not shake relative to each other.

### <Illustrative Example>

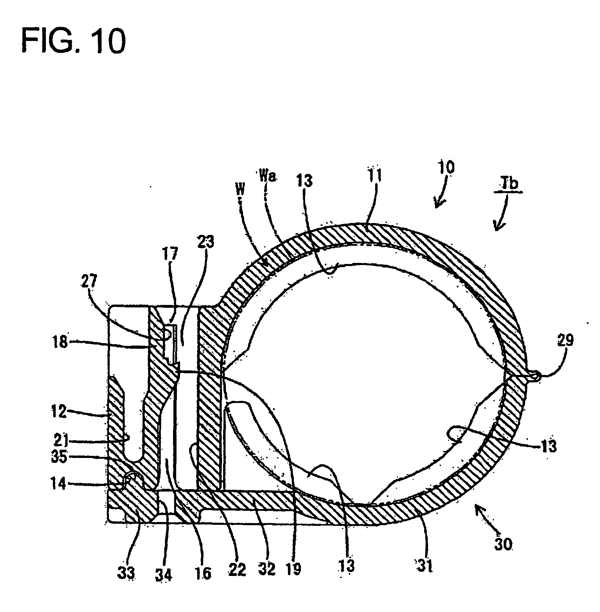

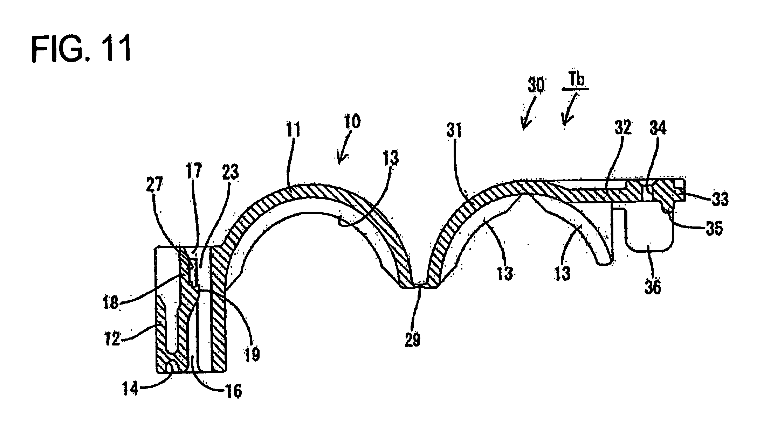

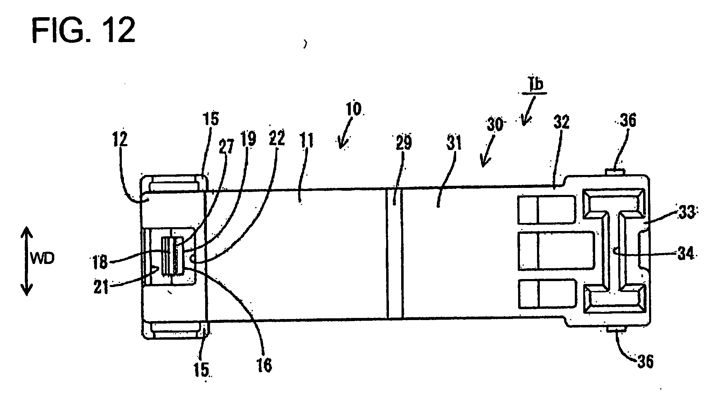

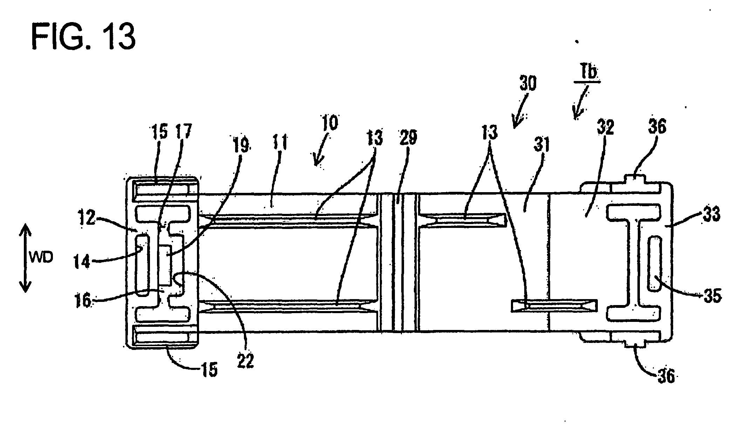

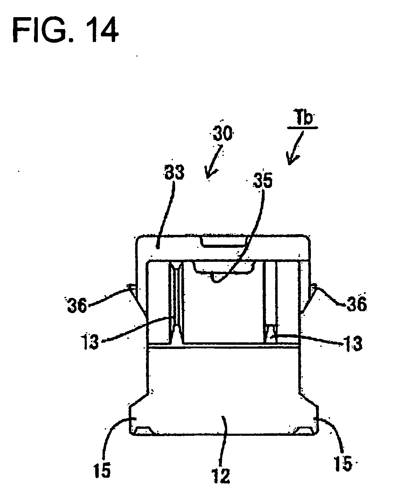

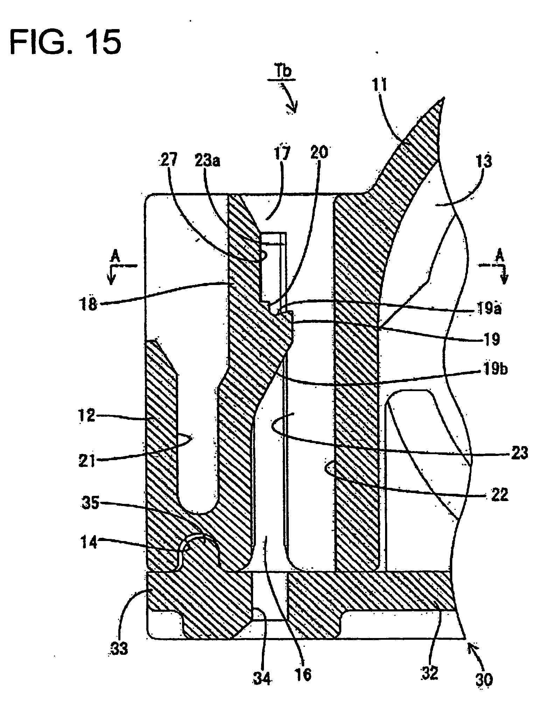

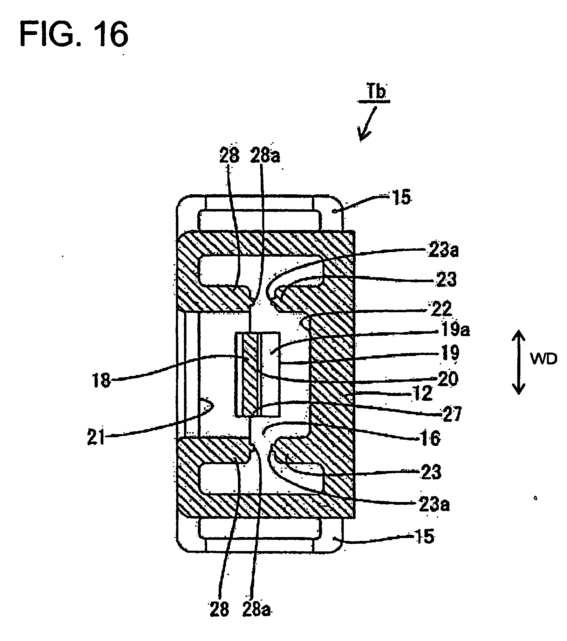

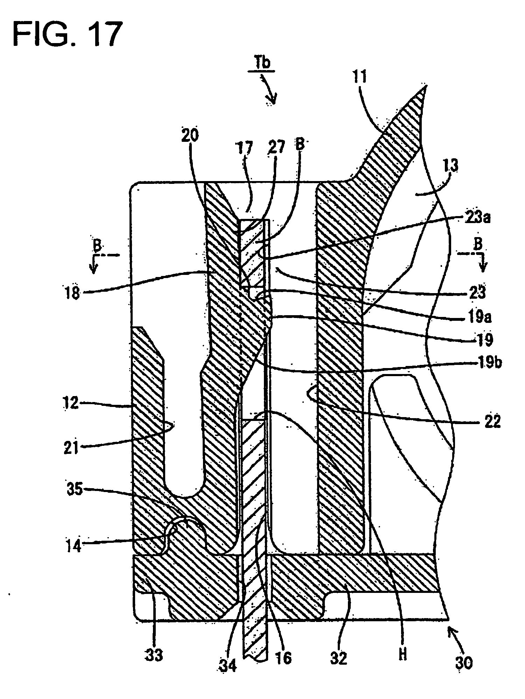

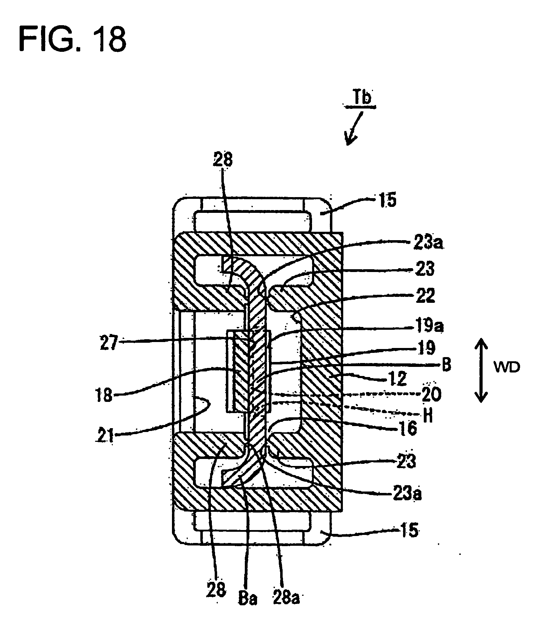

Hereinafter, anillustrative example is described with reference to FIGS. 10 to 18. A fixture Tb of the example preferably is used for attaching a wiring harness W (as a preferred article to be attached) to an attachment base (not shown) such as a vehicle, body structure, device, frame element or the like. The wiring harness W is such that one or more, preferably a plurality of wires (not shown) are at least partly surrounded together by a (preferably substantially round or elliptical bellows-shaped) corrugate tube Wa, and a plurality of engaging grooves (not shown) extending substantially in circumferential direction are formed one after another along longitudinal direction in the outer circumferential surface of the corrugate tube Wa. A (preferably substantially plate-shaped) bracket B projects substantially in a standing direction SD or upward from the attachment base. One or more (preferably substantially quarter circular) curved portions Ba are formed at the substantially opposite lateral edges substantially along the standing direction SD of the bracket B. Further, the bracket B is formed with a (preferably substantially rectangular) retaining hole H penetrating in thickness direction.

The fixture Tb is made e.g. of synthetic resin and formed such that a first and a second half pieces 10, 30 (as preferred fixture parts), which are united into a substantially tubular shape to at least partly surround the corrugate tube Wa, are made integral or unitary via at least one hinge 29. In the following description, reference is made to a state where the first and second half pieces 10, 30 are united or closed and attached to the bracket B (state shown in FIG. 10) concerning vertical direction.

The first half piece 10 (as a preferred first fixture part) includes a substantially semicircular portion 11 (as a preferred tube holding portion) and an attaching portion 12 integrally or unitarily formed at an edge portion of the substantially semicircular portion 11 substantially opposite to the hinge 29. One or more, preferably a pair of substantially semicircular engaging ribs 13 (as preferred engaging ribs) engageable with the one or more respective engaging grooves of the corrugate tube Wa are formed on a curved surface (or a surface substantially corresponding to an outer shape of the corrugate tube) at a bottom or inner side of the substantially semicircular portion 11, which surface constitutes part of the inner circumferential surface in a united state, while being spaced in width direction WD (i.e. longitudinal direction of the corrugate tube Wa). The attaching portion 12 preferably is substantially in the form of a block being long as a whole along a vertical direction or along the standing direction SD, a positioning groove 14 is formed in the bottom or base surface of the attaching portion 12, and one or more lock pieces 15 are formed at the upper end(s) of the lateral (left and/or right) outer surface(s) of the attaching portion 12. A mount hole 16 (preferably substantially H-shaped in plan view) is so formed inside the attaching portion 12 as to substantially vertically penetrate or penetrate substantially along the standing direction SD. The bracket B is at least partly insertable into the mount hole 16 in an inserting direction ID, preferably substantially from below. Further, a front stop portion 17 preferably is formed at the upper end of the mount hole 16 preferably by narrowing an opening at the upper side.

A (preferably substantially cantilever-shaped) retaining piece 18 (as a preferred resilient deforming portion) projecting substantially upward (substantially same direction as an inserting direction ID of the bracket B into the mount hole 16) is formed along the inner wall surface of the mount hole 16 in the attaching portion 12, and a deformation space 21 is formed at a side of the retaining piece 18 substantially opposite to the mount hole 16. The retaining piece 18 is located at a widthwise intermediate position (preferably substantially at a widthwise middle position) of the mount hole 16, and the upper or distal end (extending end) thereof is located at least partly in the opening of the mount hole 16 in the upper surface of the attaching portion 12 preferably so that it can be seen from the outside. Further, a (preferably substantially triangular) retaining projection 19 is formed on a surface of the retaining piece 18 substantially facing the mount hole 16. The upper surface of the retaining projection 19 is formed into a locking surface 19a strongly inclined or substantially normal to the inserting direction ID of the bracket B into the mount hole 16, and the lower surface thereof is formed into a guiding slant 19b (moderately or slightly) inclined with respect to the inserting direction ID of the bracket B. Further, a protrusion 20 is formed to project substantially in the inserting direction ID and/or standing direction SD and/or substantially upward by raising a part (base end) of the locking surface 19a of the retaining projection 19. Such a retaining piece 18 is resiliently deformable to move toward the deformation space 21 while being inclined to retract the retaining projection 19 from the mount hole 16.

An area above the retaining projection 19 (extending end area) on a surface of the retaining piece 18 substantially facing the mount hole 16 serves as a movable pressing portion 27. In a free state where the retaining piece 18 is not resiliently deformed, the retaining projection 19 projects at least partly into the mount hole 16 (insertion area for the bracket B) and the movable pressing portion 27 of the retaining piece 18 (preferably slightly) projects into the mount hole 16. Further, an area below the retaining projection 19 (base side area) on the surface of the retaining piece 18 where the retaining projection 19 is formed is substantially flush with the inner wall surface of the mount hole 16.

Further, a recess 22 for avoiding interference with the retaining projection 19 preferably is formed in an inner wall surface of the mount hole 16 substantially opposite to the retaining piece 18, and the inner wall surface where this recess 22 is formed preferably is divided into two or more areas at the substantially opposite sides of the recess 22, these two areas serving as a pair of fixed pressing portions 23 spaced apart in width direction WD. One or more sliding contact ribs 23a substantially facing the mount hole 16 are formed to project from these fixed pressing portions 23. Each sliding contact rib 23a extends substantially straight in vertical direction (direction substantially parallel to the inserting direction ID of the bracket B) over at least part, preferably substantially over the entire length of the mount hole 16, and the projecting distance thereof preferably is longer in an area corresponding to an upper end portion of the mount hole 16.

A clearance (clearance in the thickness direction of the bracket B) between the sliding contact ribs 23a of the fixed pressing portions 23 and the movable pressing portion 27 in the free state where the retaining piece 18 is not resiliently deformed preferably is set smaller than the thickness of the bracket B.

Inside the attaching portion 12, one or more, preferably a pair of supporting portions 28 are formed at the (preferably substantially opposite) side(s) of the retaining piece 18 while preferably being spaced apart in width direction WD. The supporting portions 24 are arranged substantially in conformity with the fixed pressing portions 23 with respect to width direction WD. Similar to the one or more fixed pressing portions 23, one or more contact sliding ribs 28a substantially facing the mount hole 16 project on surfaces of the supporting portions 28 substantially facing the fixed pressing portions 23. Each sliding contact rib 28a preferably extends substantially straight in vertical direction (direction substantially parallel to the inserting direction ID of the bracket B) over at least part, preferably substantially over the substantially entire length of the mount hole 16. A clearance between the sliding contact ribs 23a of the fixed pressing portions 23 and those 28a of the supporting portions 28 is set slightly larger than the thickness of the bracket B.

The second half piece 30 (as a preferred second fixture part) includes a substantially semicircular portion 31 (as a preferred tube holding portion), a substantially flat portion 32 integrally or unitarily and/or tangentially extending from an edge portion of the substantially semicircular portion 31 substantially opposite to the hinge 29, and a lid 33 integrally or unitarily formed at or near an edge portion of the substantially flat portion 32 substantially opposite to the substantially semicircular portion 31. One or more, preferably a pair of substantially semicircular engaging ribs 13 (as preferred one or mroe engaging ribs) engageable with the one or more respective engaging grooves of the corrugate tube Wa are formed (preferably in an offset manner) on curved surfaces at upper or inner sides of the substantially semicircular portion 31 and the substantially flat portion 32 which one or more surfaces constitute part of the inner circumferential surface in the united state, while preferably being spaced in width direction WD (i.e. longitudinal direction of the corrugate tube Wa). The lid 33 preferably is substantially flush with and continuous with the substantially flat portion 32, and a (preferably substantially H-shaped) receiving hole 34 similar to the mount hole 16 of the first half piece 10 is formed to vertically penetrate the lid 33. Further, a positioning projection 35 is formed on the upper surface of the lid 33, and one or more, preferably a pair of lock projections 36 are formed at the (preferably substantially opposite) lateral (left and/or right) edge(s) of the lid 33.

With the first and second half pieces 10, 30 united or joined or closed, the positioning projection 35 is engaged with the positioning groove 14, whereby the lid 33 is positioned relative to the attaching portion 12 substantially with respect to forward and backward direction and/or transverse direction (horizontal directions), the receiving hole 34 is substantially aligned with (located in conformity with) the mount hole 16, and/or the lid 33 is placed substantially in surface contact with the bottom surface of the attaching portion 12. By the engagement of the one or more lock projections 36 with the one or more lock pieces 15, the lid 33 and the attaching portion 12 are held assembled, i.e. the first and second half pieces 10, 30 are locked in the united or closed state. In this united state, the corrugate tube Wa is held between both half pieces 10, 30 from upper and lower sides, and the engaging ribs 13 are engaged with the engaging grooves, whereby the fixture Tb is attached to the corrugate tube W1 (wiring harness W) while having relative movements in the longitudinal direction of the corrugate tube W1 prevented.

As described above, the fixture Tb attached to the wiring harness W is assembled by fitting the mount hole 16 onto the bracket B which upwardly projects or projects along the standing direction SD. Upon assembling, the bracket B at least partly enters the mount hole 16 of the attaching portion 12 after passing the receiving hole 34 of the lid 33. As the assembling progresses, the upper end of the bracket B preferably comes substantially into contact with the guiding slant 19B of the retaining projection 19 and, thereafter, the retaining piece 18 is resiliently deformed toward the deformation space 21 as the bracket B is inserted. When the bracket B is inserted to a substantially proper insertion position (preferably where the bracket B cannot be inserted any further by the contact of the upper end thereof with the front stop portion 17), the retaining piece 18 is resiliently at least partly, preferably substantially fully restored and the retaining projection 19 at least partly enters the retaining hole H of the bracket B, whereby the upward facing locking surface 19a of the retaining projection 19 faces the edge (upper edge) of the retaining hole H so that it can come into contact therewith. Accordingly, even if the fixture Tb tries to move upward relative to the bracket B, such an upward movement (i.e. separation from the bracket B) of the fixture Tb is prevented by the contact of the retaining projection 19 with the edge of the retaining hole H.

Here, since the retaining piece 18 preferably is in the form of a cantilever, the posture thereof becomes oblique with respect to the one in the free state and the leading end of the retaining projection 19 comes to be displaced slightly upward with respect to the one in the free state when the retaining piece 18 is resiliently deformed toward the deformation space 21 by the interference with the bracket B. When the retaining projection 19 at least partly enters the retaining hole H as the retaining piece 18 is resiliently at least partly restored, the leading end of the retaining projection 19 is displaced downward (direction away from the upper edge of the retaining hole H). As a result, the edge (upper edge) of the retaining hole H comes to be spaced apart from the leading end of the retaining projection 19 and the locking surface 19a.

However, since the protrusion 20 preferably is formed to project upward by raising the part (base end) of the locking surface 19a in this embodiment, this protrusion 20 at least partly fills up or enters the clearance between the edge of the retaining hole H and the locking surface 19a preferably in a state where the bracket B is substantially in contact with the front stop portion 17 and the retaining piece 18 is resiliently at least partly restored. Therefore, there is no likelihood that the bracket B and the attaching portion 12 shake relative to each other in an assembling direction.

Further, since the protrusion 20 is formed at the base end of the retaining projection 19 in view of the fact that the leading end of the retaining projection 19 first at least partly enters the retaining hole H, the protrusion 20 is engaged with the upper edge of the retaining hole H only shortly before or at a final stage of the entrance of the retaining projection 19 into the retaining hole H. Accordingly, the presence of the protrusion 20 does not hinder the resiliently restoring movement of the retaining piece 18 (entrance of the retaining projection 19 into the retaining hole H).

In the process of attaching the bracket B to the fixture Tb, the bracket B having at least partly entered the mount hole 16 is sandwiched or clamped or at least partly arranged between the paired pressing portions (fixed pressing portions 23 and the movable pressing portions 27). In this embodiment, the movable pressing portions 27 out of the paired pressing portions 23, 27 preferably are provided on the retaining piece 18 resiliently deformable in directions to widen and narrow the clearance to the fixed pressing portions 23, and/or the clearance between the paired pressing portions 23, 27 preferably is set smaller than the thickness of the bracket B in the free state where the retaining piece 18 is not resiliently deformed. Accordingly, in the process of at least partly inserting the bracket B between the fixed pressing portions 23 and the movable pressing portions 27, the retaining piece 18 is resiliently deformed to widen the clearance between these pressing portions 23, 27, wherefore insertion resistance does not become excessive. Further, with the attaching portion 12 attached to the bracket B, the pressing portions 23, 27 preferably keep pressing the bracket B by the resilient force of the retaining piece 18. Thus, the attaching portion 12 and the bracket B do not shake relative to each other.

Since the supporting portions 28 that are not resiliently deformable are provided to substantially touch or face the bracket B at the same side as the retaining piece 18 in this embodiment, there is no likelihood of plastically deforming the retaining piece 18 beyond the resiliency limit thereof by the interference with the bracket B. Further, since the pair of supporting portions 28 preferably are provided at the substantially opposite sides of the retaining piece 18 with respect to width direction WD, the inclination of the bracket B in width direction WD (direction at an angle different from 0° or 180°, preferably substantially normal to the entering or inserting direction ID of the bracket B into the mount hole 16) can also be prevented.

Further, since the retaining piece 18 for preventing the separation from the bracket B preferably doubles as a resilient deforming portion for resiliently sandwiching the bracket B in this embodiment, the structure of the attaching portion 12 can be more simplified as compared to the case where a resilient deforming portion is provided in addition to the retaining piece 18.

### <Other Embodiments>

The present invention is not limited to the above described and illustrated preferred embodiment. For example, the following embodiments are also embraced by the technical scope of the present invention as defined by the claims.
(1) Although the retaining piece and the holding pieces are in the form of cantilevers extending in the same direction in the preferred embodiment, the extending direction of the retaining piece and that of the holding pieces may be opposite to each other according to the present invention.
(2) A construction of the illustrative example for sandwiching the bracket utilizing the resilient force of the retaining piece may be added to the preferred embodiment.
(3) Although the holding pieces are designed to come into contact with the bracket from the same side as the retaining piece in the preferred embodiment, the holding pieces may come into contact with the bracket from a side opposite to the retaining piece according to the present invention.
(4) Although the holding pieces formed with the pressing portions are provided at two positions spaced apart in the width direction of the bracket in the preferred embodiment, only one holding piece may also be provided. In such a case, the position of the holding piece may be at a widthwise middle position of the bracket or may be at a position deviated from the widthwise middle of the bracket.
(5) Although two holding pieces formed with the pressing portions are arranged at the opposite sides of the retaining piece in the preferred embodiment, two retaining pieces formed with no pressing portion may be arranged at the opposite sides of one holding piece formed with a pressing portion.
(6) Although the holding pieces are in the form of cantilevers extending in the substantially same direction as the inserting direction of the bracket into the mount hole in the preferred embodiment, the extending direction thereof may be opposite to the inserting direction of the bracket into the mount hole.
(7) Although the protrusion is formed to project at the base end of the retaining projection by raising the locking surface in the foregoing embodiment, no such protrusion may be formed according to the present invention.

### LIST OF REFERENCE NUMERALS

- Ta: fixture
- W: wiring harness (article to be attached)
- B: bracket
- H: retaining hole
- 10: first half piece (first fixture part)
- 11: substantially semicircular portion (tube holding portion)
- 12: attaching portion
- 13: engaging ribs
- 18: retaining piece (resilient deforming portion)
- 19: retaining projection
- 19a: locking surface
- 20: protrusion
- 23: fixed pressing portion
- 24: holding piece (resilient deforming portion)
- 26: movable pressing portion
- 30: second half piece (second fixture part)
- 31: substantially semicircular portion (tube holding portion)
- Tb: fixture
- 27: movable pressing portion

## Claims

1. A fixture (Ta; Tb) for attaching an article (W) to be attached such as a wiring harness to an attachment base such as a vehicle, comprising at least two fixture parts (10, 30) to be united to at least partly surround the article (W) to be attached, one fixture part (10) including an attaching portion (12) having at least one pair of pressing portions (23, 26), the fixture (Ta; Tb) being attacheable to the attachment base by sandwiching a bracket (B) provided on the attachment base between the paired pressing portions (23, 26), wherein the bracket (B) is substantially plate-shaped and projects in a standing direction (SD) from the attachment base, and wherein:
the attaching portion (12) includes the at least one pair of pressing portions (23, 26), wherein at least one resilient deforming portion (24) is resiliently deformable in directions to widen and narrow a clearance between the paired pressing portions (23, 26), and wherein
the clearance between the pair of pressing portions (23, 26) is set smaller than the thickness of the bracket (B) in a free state where the resilient deforming portion (24) is not resiliently deformed,
**characterized in, that**
the attaching portion (12) includes at least one retaining piece (18) that is resiliently deformable in directions intersecting with an attaching direction to the bracket (B) and can prevent the attaching portion (12) from being separated from the bracket (B) by being engaged with the bracket (B), wherein
a surface of the resilient deforming portion (24) facing a fixed pressing portion (23) of the pair of pressing portions (23, 26) serves as a movable pressing portion (26) of the pair of pressing portions (23, 26).

2. A fixture according to claim 1, wherein a pair of resilient deforming portions (23, 26) are arranged while being spaced apart in the width direction (WD) of the bracket (B).

3. A fixture according to one or more of the preceding claims, wherein the resilient deforming portion (24) and the retaining piece (18) are arranged at the same side with respect to the bracket (B).

4. A fixture according to one or more of the preceding claims, wherein the retaining piece (18) is in the form of a cantilever extending substantially along the attaching direction to the bracket (B).

5. A fixture according to one or more of the preceding claims, wherein the retaining piece (18) is formed with a retaining projection (19) that has a locking surface (19a) engageable with a retaining hole (H) of the bracket (B) and can prevent the attaching portion (12) from being separated from the bracket (B) by being engaged with the retaining hole (H).

6. A fixture according to claim 5, wherein the retaining projection (19) is formed with a protrusion (20) by raising a part of the locking surface (19a), wherein the protrusion (20) preferably is formed at the base end of the retaining projection (19).

7. A fixture according to claim 6, wherein the protrusion (20) at least partly fills up the clearance between the retaining hole (H) and the locking surface (19a) in a state where the bracket (B) is in contact with a front stop portion (17) and the retaining piece (18) is resiliently at least partly restored.

8. A fixture according to one or more of the preceding claims, wherein a front stop portion (17) is provided such that the bracket (B) cannot be inserted any further by the contact of the distal end edge thereof with the front stop portion (17) when the bracket (B) is inserted to a substantially proper insertion position.

9. A fixture according to one or more of the preceding claims, wherein a mount hole (16) being substantially H-shaped in plan view is so formed inside the attaching portion (12) as to penetrate substantially along an inserting direction (ID) of the bracket (B).

## Patentansprüche

1. Halterung (Ta; Tb) zum Anbringen eines anzubringenden Artikels (W), wie einem Kabelbaum, an einer Anbringungsbasis, wie einem Fahrzeug, umfassend zumindest zwei Halterungsteile (10, 30), die zu vereinen sind, um den anzubringenden Artikel (W) zumindest teilweise zu umgeben, wobei ein Halterungsteil (10) einen Anbringungsabschnitt (12) mit zumindest einem Paar Pressabschnitte (23, 26) enthält, wobei die Halterung (Ta; Tb) durch sandwichartiges Umgeben bzw. Anordnen eines Trägers (B) an der Anbringungsbasis anbringbar ist, der an der Anbringungsbasis zwischen den paarweisen Pressabschnitten (23, 26) vorgesehen ist, wobei der Träger (B) im Wesentlichen plattenförmig ist und in einer Stehrichtung (SD) von der Anbringungsbasis vorragt, und wobei:
der Anbringungsabschnitt (12) das zumindest eine Paar Pressabschnitte (23, 26) enthält, wobei zumindest ein rückstellfähiger Verformungsabschnitt (24) in Richtungen rückstellfähig verformbar ist, um einen Zwischenraum zwischen den paarweisen Pressabschnitten (23, 26) zu verbreitern und zu verschmälern, und wobei
der Zwischenraum zwischen dem Paar Pressabschnitte (23, 26) kleiner festgelegt ist als die Dicke des Trägers (B) in einem freien Zustand, wo der rückstellfähige Verformungsabschnitt (24) nicht rückstellfähig verformt wird bzw. ist,
**dadurch gekennzeichnet, dass**
der Anbringungsabschnitt (12) zumindest ein Rückhaltestück (18) enthält, das rückstellfähig in Richtungen verformbar ist, die sich mit einer Anbringungsrichtung an den Träger (B) schneiden, und das verhindern kann, dass der Anbringungsabschnitt (12) von dem Träger (B) getrennt wird, indem es mit dem Träger (B) in Eingriff ist, wobei
eine Fläche bzw. Oberfläche des rückstellfähigen Verformungsabschnitts (24), die einem fixierten bzw. festen Pressabschnitt (23) des Paars Pressabschnitte (23, 26) zugewandt ist, als ein beweglicher Pressabschnitt (26) des Paars Pressabschnitte (23, 26) dient.

2. Halterung nach Anspruch 1, wobei ein Paar rückstellfähiger Verformungsabschnitte (23, 26) unter Beabstandung in der Breitenrichtung (WD) des Trägers (B) angeordnet sind.

3. Halterung nach einem oder mehreren der vorhergehenden Ansprüche, wobei der rückstellfähige Verformungsabschnitt (24) und das Rückhaltestück (18) auf der gleichen bezüglich des Trägers (B) angeordnet sind.

4. Halterung nach einem oder mehreren der vorhergehenden Ansprüche, wobei das Rückhaltestück (18) die Form eines Auslegerarms aufweist, der sich im Wesentlichen entlang der Anbringungsrichung an den Träger (B) erstreckt.

5. Halterung nach einem oder mehreren der vorhergehenden Ansprüche, wobei das Rückhaltestück (18) mit einem Rückhaltevorsprung (19) gebildet ist, der eine Verriegelungsfläche bzw. -oberfläche (19a) aufweist, die mit einem Rückhalteloch (H) des Trägers (B) in Eingriff bringbar ist, und der verhindern kann, dass der Anbringungsabschnitt (12) von dem Träger (B) getrennt wird, indem er mit dem Rückhalteloch (H) in Eingriff ist.

6. Halterung nach Anspruch 5, wobei der Rückhaltevorsprung (19) mit einer Auskragung (20) gebildet ist, indem ein Teil der Verriegelungsfläche bzw. -oberfläche (19a) erhöht ist, wobei die Auskragung (20) vorzugsweise an dem Basisende des Rückhaltevorsprungs (19) gebildet ist.

7. Halterung nach Anspruch 6, wobei die Auskragung (20) den Zwischenraum zwischen dem Rückhalteloch (H) und der Verriegelungsfläche bzw. -oberfläche (19a) zumindest teilweise in einem Zustand ausfüllt, wo der Träger (B) mit einem vorderen Stoppabschnitt (17) in Kontakt ist und das Rückhaltestück (18) zumindest teilweise rückstellfähig zurückgestellt ist.

8. Halterung nach einem oder mehreren der vorhergehenden Ansprüche, wobei ein vorderer Stoppabschnitt (17) derart vorgesehen ist, dass der Träger (B) durch den Kontakt der distalen Endkante bzw. -rand davon mit dem vorderen Stoppabschnitt (17) nicht weiter eingesetzt werden kann, wenn der Träger (B) zu einer bzw. auf eine im Wesentlichen ordnungsgemäße Einsetzposition eingesetzt wird.

9. Halterung nach einem oder mehreren der vorhergehenden Ansprüche, wobei ein Montageloch (16), das in Draufsicht im Wesentlichen H-förmig ist, so innerhalb des Anbringungsabschnitts (12) gebildet ist, dass es im Wesentlichen entlang einer Einsetzrichtung (ID) des Trägers (B) penetriert.

## Revendications

1. Dispositif de fixation (Ta ; Tb) pour fixer un article (W) à attacher, tel qu'un faisceau de fils, à une base de fixation telle qu'un véhicule, comprenant au moins deux éléments de fixation (10, 30) devant être reliés pour entourer au moins partiellement l'article (W) à attacher, un élément de fixation (10) comprenant une partie d'attachement (12) ayant au moins une paire de parties de pression (23, 26), le dispositif de fixation (Ta ; Tb) pouvant être attaché à la base de fixation en intercalant un support de fixation (B) fourni sur la base de fixation entre les parties de pression jumelées (23, 26), dans lequel le support de fixation (B) a sensiblement une forme de plaque et se projette dans une direction verticale (SD) depuis la base de fixation, et dans lequel :
la partie d'attachement (12) comprend au moins une paire de parties de pression (23, 26), au moins une partie de déformation élastique (24) étant déformable élastiquement dans des directions afin d'élargir et de rétrécir un jeu entre les parties de pression jumelées (23, 26), et
le jeu entre la paire de parties de pression (23, 26) étant défini inférieur à l'épaisseur du support de fixation (B) dans un état libre dans lequel la partie de déformation élastique (24) n'est pas déformée élastiquement,
**caractérisé en ce que**
la partie d'attachement (12) comprend au moins une pièce d'arrêt (18) qui est déformable élastiquement dans des directions croisant une direction d'attachement au support de fixation (B), et peut éviter que la partie d'attachement (12) ne se désolidarise du support de fixation (B) en étant en prise avec le support de fixation(B), dans lequel
une surface de la partie de déformation élastique (24) faisant face à une partie de pression fixe (23) de la paire de parties de pression (23, 26) joue le rôle de partie de pression mobile (26) de la paire de parties de pression (23, 26).

2. Dispositif de fixation selon la revendication 1, dans lequel est disposée une paire de parties de déformation élastiques (23, 26) espacées les unes des autres dans la direction de largeur (WD) du support de fixation (B).

3. Dispositif de fixation selon l'une ou plusieurs des revendications précédentes, dans lequel la partie de déformation élastique (24) et la pièce d'arrêt (18) sont disposées du même côté par rapport au support de fixation (B).

4. Dispositif de fixation selon l'une ou plusieurs des revendications précédentes, dans lequel la pièce d'arrêt (18) a la forme d'un bras s'étendant sensiblement le long de la direction d'attachement au support de fixation (B).

5. Dispositif de fixation selon l'une ou plusieurs des revendications précédentes, dans lequel la pièce d'arrêt (18) est formée d'une saillie de blocage (19) présentant une surface de verrouillage (19a) pouvant entrer en prise avec un orifice d'arrêt (H) du support de fixation (B), et peut éviter que la partie d'attachement (12) ne se désolidarise du support de fixation (B) en étant en prise avec l'orifice d'arrêt (H).

6. Dispositif de fixation selon la revendication 5, dans lequel la saillie de blocage (19) est formée d'une protubérance (20) par élévation d'une partie de la surface de verrouillage (19a), dans lequel la protubérance (20) est formée de préférence à l'extrémité de base de la saillie d'arrêt (19).

7. Dispositif de fixation selon la revendication 6, dans lequel la protubérance (20) comble au moins partiellement le jeu entre l'orifice d'arrêt (H) et la surface de verrouillage (19a) dans un état dans lequel le support de fixation (B) est en contact avec une partie d'arrêt avant (17) et la pièce d'arrêt (18) est au moins partiellement restaurée élastiquement.

8. Dispositif de fixation selon l'une ou plusieurs des revendications précédentes, dans lequel une partie d'arrêt avant (17) est fournie de telle sorte que le support de fixation (B) ne peut pas être introduit davantage par le contact de son bord d'extrémité distale avec la partie d'arrêt avant (17), lorsque le support de fixation (B) est introduit dans une position d'insertion sensiblement correcte.

9. Dispositif de fixation selon l'une ou plusieurs des revendications précédentes, dans lequel un orifice de montage (16) étant sensiblement en forme de H dans une vue en plan est formé à l'intérieur de la partie d'attachement (12) de manière à pénétrer sensiblement le long d'une direction d'insertion (ID) du support de fixation (B).
